# EUROPÄISCHE PATENTSCHRIFT

(11) **EP 0 762 274 B1**
(45) Veröffentlichungstag und Bekanntmachung des Hinweises auf die Patenterteilung: **10.06.1998**
(21) Anmeldenummer: 96113092.9
(22) Anmeldetag: 14.08.1996
(51) Int. Cl.: G06F 9/46

(54) **Einrichtung und Verfahren zur Echtzeit-Verarbeitung einer Mehrzahl von Tasks**
Apparatus and method for real time processing of multiple tasks
Dispositif et procédé pour le traitement en temps réel de plusieurs tâches

(30) Priorität: 18.08.1995 DE 19530483
(43) Veröffentlichungstag der Anmeldung: 12.03.1997
(73) Patentinhaber: SIEMENS AKTIENGESELLSCHAFT, 80333 München (DE)
(72) Erfinder: He, Xiaoyong, A-1150 Wien (AT)

(56) Entgegenhaltungen:
- EP-A- 0 553 588
- US-A- 4 642 756
- PROCEEDINGS OF THE REAL-TIME SYSTEMS SYMPOSIUM (CAT. NO.86CH2351-5), NEW ORLEANS, LA, USA, 2-4 DEC. 1986, ISBN 0-8186-0749-1, 1986, WASHINGTON, DC, USA, IEEE COMPUT. SOC. PRESS, USA, Seiten 209-215, XP002019579 VOLZ R A ET AL: "Instruction level mechanisms for accurate real-time task scheduling"

## Beschreibung

Die vorliegende Erfindung bezieht sich auf eine Einrichtung und ein Verfahren zur Verarbeitung einer Mehrzahl von Tasks in einem Prozessor einer Echtzeit-Datenverarbeitungsanlage, in welcher jeder Task nach einer dynamisch zugeordneten Priorität einzeln und innerhalb einer vorbestimmten Zeitperiode durch den Prozessor zu verarbeiten ist.

Bei einem Echtzeitsystem der oben genannten Art mit einer dynamischen Prioritätszuteilung wird die Priorität eines Tasks oder eines Interrupts gemäß der relativen Dringlichkeit zugewiesen, und zwar bezogen auf den Zeitpunkt, zu welchem ein Task für die Bearbeitung zur Verfügung steht bzw. ein Interrupt angefordert wird.

In vielen der bisher verwendeten Systemen besteht für Tasks und Interrupt Requests eine statische Prioritätszuteilung, die sich im Lauf der Zeit nicht verändert. Um in einem solchen System mit n unabhängigen periodischen Tasks die rechtzeitige Verarbeitung aller Tasks zu ermöglichen, darf die Prozessorauslastung den theoretischen Wert von n(2^{1ₙ}-1) nicht überschreiten. Für große n konvergiert dieser Wert rasch zu In2=0,69. Das heißt, die Prozessorauslastung kann in einem solchen System nur maximal 70% betragen und der Prozessor benötigt zumindest 30% Idle Time, um alle Tasks rechtzeitig verarbeiten zu können.

Zur Verbesserung der Prozessorauslastung und somit der Performance der gesamten Datenverarbeitungseinrichtung ist bereits versucht worden, eine dynamische Prioritätszuteilung zu realisieren. Eine theoretische Grundlage für eine solche dynamische Prioritätszuteilung, mit welcher eine Prozessorauslastung von 100% erreicht werden kann, geht aus der Veröffentlichung mit dem Titel "Scheduling Algorithms for Multiprogramming in a Hard Real-Time Enviroment" in Journal of the Association for Computing Machinery, Vol 20, January 1973, Seiten 46-61 hervor. Darin ist ein Algorithmus für eine Prioritätsaufteilung beschrieben, die mit Earliest Deadline First (EDF) bezeichnet wird. Von allen zur Verarbeitung anstehenden Tasks erhält gemäß EDF jener die höchste Priorität, bei welchem die Zeitspanne für seine Verarbeitung am frühesten abläuft. In der genannten Veröffentlichung findet sich unter anderem auch ein Vergleich der theoretischen Performance zwischen einem System mit statischer Prioritätszuteilung und einem mit dynamischer Prioritätszuteilung und weiters ein Vergleich dieser Systeme mit einer gemischten Prioritätszuteilung.

Obwohl mit einer dynamischen Prioritätszuteilung nach EDF eine 100% Prozessorauslastung erreicht werden kann, ist die Performance des Systems nicht verbessert worden, da der Prozessor dabei zusätzlich den Algorithmus für die Prioritätszuteilung verarbeiten muß. In der Praxis hat sich gezeigt, daß der Algorithmus für die Prioritätszuteilung in einigen Fällen einen Overhead von bis zu 80% der Prozessorzeit verursacht, sodaß nur noch 20% der Prozessorzeit für die tatsächliche Verarbeitung der Tasks zur Verfügung steht.

Eine Verringerung der Prozessorauslastung durch die Verarbeitung des Prioritätszuteilungs-Algorithmus kann verhindert werden, indem zur Verarbeitung des Algorithmus der Prioritätszuteilung ein zusätzlicher Prozessor vorgesehen ist, welcher ausschließlich für diese Aufgabe zuständig ist. Eine solche Lösungsvariante kann der Veröffentlichung "Implementation and Evaluation of a Time-Driven Scheduling Processor" in EEE Transactions on Computers, 7/88, 172ff entnommen werden. Mit diesem System ist es möglich, 98% der Prozessorzeit für die Verarbeitung von Tasks zu gewinnen. Eine Lösung dieser Art hat jedoch den Nachteil, daß der Hardwareaufwand erheblich ansteigt und das System daher für viele Anwendungen zu teuer ist.

Aus der US 4 642 756 ist eine Einrichtung und ein Verfahren zur Verarbeitung einer Mehrzahl von Tasks in einem Prozessor bekannt, bei dem in einer Logikschaltung anhand von Taskprioritäten eine Reihenfolge berechnet wird, in der die verschiedenen Tasks auszuführen sind. Die Logikeinrichtung ist durch einen separaten bzw. teueren Prozessor oder durch den die Tasks verarbeitenden Prozessor realisiert, wobei im letzteren Fall die Prozessorauslastung reduziert wird.

Desweiteren ist aus der EP 0 533 588 A3 ein Verfahren und ein Betriebssystem zur Zuteilung von Tasks in einem Echtzeit-Computersystem bekannt, bei dem der Zuteilungsoverhead zur Zeit der Zuteilung dadurch vermieden wird, daß alle aktiven, rückläufigen Tasks in einer Warteschlange oder Liste angeordnet werden. Hierbei wird die Ausführungsreihenfolge der Tasks dynamisch immer wieder aktualisiert, wenn eine Task abgearbeitet ist. Einträge in der Liste sind nicht die Tasks selbst, sondern Platzhalter oder Rahmen zur Einleitung der jeweiligen Tasks, die auf der Grundlage von maximal zugelassenen Wartezeiten basiert. Die Bearbeitung dieser Liste wird durch den die Tasks bearbeitenden Prozessor vorgenommen, wodurch die Prozessorauslastung reduziert wird.

Es ist daher eine Aufgabe der vorliegenden Erfindung, ein Verfahren und eine Einrichtung zu schaffen, bei welcher die Prozessorauslastung bei Anwendung einer dynamischen Prioritätszuteilung gemäß EDF bei einer Einrichtung ohne zusätzlichem Prozessor gegenüber bekannten Systemen hoch ist. Eine solche Lösung sollte ferner ohne hohen Kostenaufwand realisierbar sein.

Erfindungsgemäß wird die obige Aufgabe durch ein Verfahren zur Verarbeitung einer Mehrzahl von Tasks durch einen Prozessor einer Datenverarbeitungseinrichtung gelöst, bei welcher jeder Task nach einer dynamisch zugeordneten Priorität einzeln und innerhalb einer vorbestimmten Zeitperiode durch den Prozessor zu verarbeiten ist und bei dem für jede durch den Prozessor zu verarbeitende Task eine Initialisierungszelle erstellt wird, die jeweils eine Anzahl von t-Bits aufweisen, welche eine Zeitablaufinformation enthalten, die angibt, innerhalb welcher Zeit die Verarbeitung des Tasks zu erfolgen, sowie eine Anzahl von i-Bits aufweisen, welche eine auf einen Task Control Block der Datenverarbeitungsanlage verweisende Indexinformation enthalten. Eine erstellte Initialisierungszelle wird in eine freie Contention-Zelle einer Contention-Unit eingetragen. Die eingetragenen Zeitablaufinformationen werden verglichen, um jenen Task zu ermitteln, der aktuell die kleinste Zeitablaufinformation aufweist. Ein Interrupt-Signal wird an den Prozessor gesendet, um die Verarbeitung des aktuell ermittelten Task einzuleiten, sofern der ermittelte Task nicht mit dem zuvor ermittelten Task übereinstimmt, der gerade durch den Prozessor verarbeitet wird.

Ebenso wird die gestellte Aufgabe durch eine Einrichtung zur Verarbeitung einer Mehrzahl von Tasks innerhalb einer vorbestimmten Zeitperiode durch einen Prozessor nach einer dynamisch zugeordneten Priorität gelöst, in welcher sie für jeden zu verarbeitenenden Task Mittel zum Erstellen einer Initialisierungszelle aufweist, bestehend aus einer Anzahl von t-Bits, welche eine Zeitablaufinformation enthalten, die angibt, innerhalb welcher Zeit die Verarbeitung des Tasks zu erfolgen hat, sowie einer Anzahl von i-Bits, welche eine auf einen Task Control Block der Datenverarbeitungsanlage verweisende Indexinformation enthalten. Desweiteren weist sie Mittel zum Eintragen jeder erstellten Initialisierungszelle in eine freie Contention-Zelle einer Contention-Unit und Mittel zum Vergleichen der Zeitablaufinformationen der eingetragenen Initialisierungszellen auf, um jenen Task zu ermitteln, dessen Zeit, bis er zu verarbeiten ist, am frühesten abläuft.

Desweiteren sind Mittel zum Senden eines Interrupt-Signals an den Prozessor vorgesehen, um die Verarbeitung des ermittelten Tasks einzuleiten, sofern der ermittelte Task nicht mit dem zuvor ermittelten Task übereinstimmt, der gerade durch den Prozessor verarbeitet wird.

Durch dieses Verfahren bzw. die Einrichtung ist die Auslastung des Prozessors sehr hoch, da der Prozessor keinen Overhead-Code für die Prioritätszuteilung verarbeiten muß. Der Prozessor kann somit bis zur theoretischen Grenze von 100% mit Tasks belastet werden. Der Hardware-Aufwand für die Contention-Unit ist im Vergleich zu einem zusätzlichen Prozessor äußerst gering. Eine Contention-Unit kann z.B. einen einfachen statischen RAM-Speicherblock oder einfache binäre Zähler aufweisen, in welchem die Contention-Zellen abgespeichert sind.

Bei einer Ausführungsform des Verfahrens bzw. der Einrichtung wird die Initialisierungszelle in vorteilhafter Weise durch eine Prozeßinitialisierungseinheit erstellt, in welcher für jeden zugelassenen externen Event, der einen Task zur Verarbeitung durch den Prozessor auslöst, eine Initialisierungszelle mit vorcodierten oder durch den Prozessor initialisierten t- und i-Bits enthalten ist. Im Rahmen der Erfindung ist weiters vorgesehen, daß für einen zu verarbeitenden internen Task, z.B. einen Subtask, die t- und i-Bits für eine Contention-Zelle durch den Prozessor erstellt und in die Contention-Unit eingetragen werden.

Weiters ist es im Rahmen der Erfindung von Vorteil, wenn ein r-Bit in jeder Zelle der Contention-Unit angibt, ob sie belegt ist oder nicht. Dieses r-Bit wird immer vor Eintragen einer Zelle in die Contention-Unit überprüft, um sicher zu gehen, daß die vorgesehene Zelle nicht bereits durch eine Eintragung für einen anderen Task besetzt ist. Wenn der zugehörige Task beendet ist, wird dieses r-Bit wieder zurückgesetzt, um eine freie Zelle anzuzeigen.

Weiters hat es sich als vorteilhaft erwiesen, wenn jede Zelle der Contention-Unit zusätzlich f-Bits enthält, welche für eine Intertask-Kommunikation, z.B. Semaphore, Event Flags oder Message Boxes, vorgesehen sind, durch welche die Teilnahme einer Contention-Zelle an dem Vergleich der in den t-Bits enthaltenen Zeitablaufinformationen vorübergehend unterdrückt werden kann. Wenn ein Task auf eine bestimmte Voraussetzung warten muß, wird in der Contention-Zelle dieses Tasks ein f-Bit gesetzt, um ihn vorübergehend von dem Vergleich der in den t-Bits enthaltenen Zeitablaufinformationen ausgeschlossen. Wenn die Voraussetzungen für die Weiterverarbeitung dieses Tasks erfüllt sind, wird das f-Bit der zugeordneten Contention-Zelle wieder rückgesetzt, sodaß diese Zelle danach an dem Vergleich der t-Bits wieder teilnehmen kann. Dadurch kann in einfacher Weise ein aktiver und ein inaktiver Zustand einer Contention Zelle dargestellt werden.

Eine besonders vorteilhafte Ausführungsform des erfindungsgemäßen Verfahrens ergibt sich dadurch, daß zu der in den t-Bits einer Initialisierungszelle enthaltenen relativen Zeitinformation vor Eintragen dieser Zelle in die Contention-Unit der Wert eines nach oben zählenden Zählers addiert wird, um eine Absolutzeitinformation zu generieren, welche durch die t-Bits der Contention-Zelle repräsentiert wird. Da in der Contention-Zelle nur noch Absolutzeitinformationen gespeichert sind, müssen nur noch diese Eintragungen untereinander verglichen werden, um festzustellen, welcher Task die geringste Zeitablaufinformation enthält.

In vorteilhafter Weise erfolgt das Vergleichen der Zeitablaufinformationen der aktiven Contention-Zellen nur dann, wenn sich der Zustand der r- und f-Bits zumindest einer der Contention-Zellen verändert hat. Das heißt, der Vergleich wird nur dann durchgeführt, wenn eine Contention-Zelle in die Contention-Unit neu eingetragen oder aus dieser gelöscht wurde oder wenn die Teilnahme einer Contention-Zelle an dem Vergleich der Zeitablaufinformationen unterdrückt oder wieder zugelassen ist. Unabhängig vom Zustand der r- und f-Bits der Contention-Zellen wird jedoch weiters periodisch ein Vergleich der Zeitablaufinformationen aller belegten Contention-Zellen (aktive und inaktive Zellen) durchgeführt, um ein Overloading anzuzeigen, sobald der Wert der ermittelten kleinsten Zeitablaufinformationen kleiner als jener des Zählers ist. Diese Overloading-Sicherung dient dazu, bei einer Prozessorbelastung von über 100% Routinen zu aktivieren, die auch in diesem Fall einen sicheren weiteren Ablauf der Datenverarbeitung ermöglichen. Ebenso kann über diese Interrupt-Routine eine Endlosschleife verarbeitet werden.

Im Rahmen der vorliegenden Erfindung wird somit zwischen relativen und absoluten Zeitablaufinformationen in folgender Weise unterschieden. Eine relative Zeitinformation gibt eine Zeitspanne an, z.B. 15 ms, innerhalb welcher die Verarbeitung des Tasks spätestens beendet sein muß. Eine solche relative Zeitablaufinformation ist bei dem weiter unten beschriebenen bevorzugten Ausführungsbeispiel unter anderem in den t-Bits der Initialisierungszelle enthalten. Zur Vereinfachung kann die relative Zeitablaufinformation auch indirekt durch einen binären Wert, z.B. eine Anzahl von Taktperioden eines binären Zählers, dargestellt werden, welcher als eine Zeitangabe dient. Eine absolute Zeitablaufinformation hingegen gibt einen Zeitpunkt an, z.B. 10h 15' 45" 01ms, bis zu welchem die Verarbeitung des Tasks spätestens beendet sein muß. Eine Absolutzeitinformation dieser Art kann natürlich auch unabhängig von der Tageszeit durch einen nach oben zählenden Zähler realisiert werden. Eine solche absolute Zeitinformation ist bei diesem bevorzugten Ausführungsbeispiel in den t-Bits der Contention-Zelle enthalten. Dadurch daß bei der Eintragung einer Zelle in die Contention-Unit die relative Zeitinformation in eine absolute Zeitinformation umgewandelt wird, müssen die t-Bits der Contention-Zellen in vorteilhafter Weise nicht nach jedem Taktzyklus erneuert werden.

Im folgenden wird die vorliegende Erfindung anhand eines konkreten, nicht einschränkenden Ausführungsbeispiels mit Bezug auf die beiliegenden Figuren 1, 2, 3 und 4 näher erläutert, die zeigen:
Figur 1 ein schematisches Blockschaltbild einer erfindungsgemäßen Einrichtung mit der Initialisierungseinheit und der Contention-Unit und
Figur 2 ein Blockschaltbild der Einrichtung nach Figur 1, bei welchem einzelne Verfahrensabläufe durch Ziffern gekennzeichnet sind.
Figur 3 eine schematische Detaildarstellung des Arbiters der Contention-Unit und
Figur 4 zeigt einen typischen Zeitverlauf unterschiedlicher Signale des Arbiters.

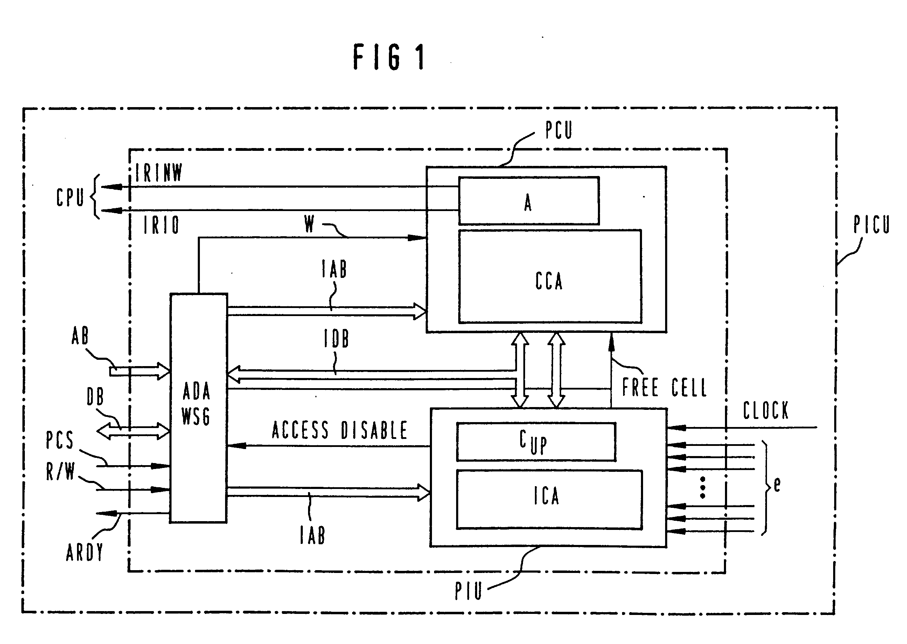

Vorerst wird auf die Figur 1 Bezug genommen, in welcher eine Einrichtung PICU (Process-Initiation and Contention-Unit) der erfindungsgemäßen Art schematisch dargestellt ist, in welcher eine Prozeßinitialisierungseinheit PIU (Process Initiation Unit) und eine Contention-Unit PCU (Process Contention-Unit) enthalten sind.

An die Prozeßinitialisierungseinheit PIU sind eine Mehrzahl von Signalleitungen gelegt, welche je einen externen Event darstellen, durch welchen ein bestimmter Task zur Verarbeitung durch den (hier nicht dargestellten) Prozessor CPU signalisiert werden kann. Die Prozeßinitialisierungseinheit weist zu diesem Zweck für jedes externe Eventsignal je eine Initialisierungszelle IC (Initiation Cell) auf, die alle zu einem Array ICA (Initiation Cell Array) zusammengefaßt sind. Jede Initialisierungszelle IC enthält eine bestimmte Anzahl von Bits, nämlich eine Anzahl n t-Bits, welche für den entsprechenden Task eine relative Zeitinformation wiedergeben, innerhalb welcher Zeitspanne der Task spätestens durch den Prozessor CPU zu verarbeiten ist, um den Anforderungen der Echtzeitverarbeitung zu genügen, eine Mehrzahl von i-Bits, welche einen Index bilden, der auf den Task Control Block TCB der Datenverarbeitungsanlage verweist, wo weitere Information für die Verarbeitung des jeweiligen Tasks gespeichert sind, und eine Anzahl von f-Bits, die als Flags, z.B. für Inter-Task Kommunikation benutzt werden. Die t-Bits können für jeden möglichen Task bereits in dem Array ICA vorcodiert sein oder beim Start-Up der Datenverarbeitungsanlage in das Array ICA geschrieben werden. Die i-Bits werden in der Initialisierungsphase eines Tasks durch den Prozessor CPU in die zugeordnete Zelle geschrieben. In der Prozeßinitialisierungseinheit PIU ist weiters ein nach oben zählender, n Bit breiter Zähler C_{UP} vorgesehen, dessen Inhalt zu dem Inhalt der t-Bits einer Initialisierungszelle IC addiert wird, bevor diese Zelle in die Contention-Unit PCU eingetragen wird, um eine Absolutzeitinformation zu erzeugen, die angibt, bis zu welchem Zeitpunkt, gerechnet von seiner Initialisierung dieser Task spätestens durch den Prozessor zu verarbeiten ist. Der Zähler C_{UP} wird durch einen externen Takt CLOCK getaktet.

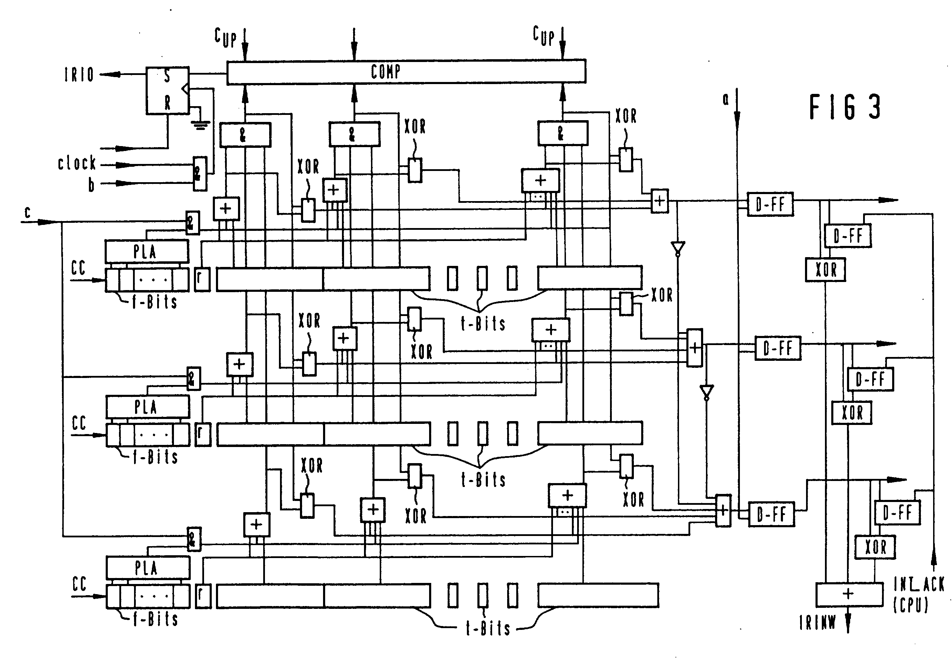

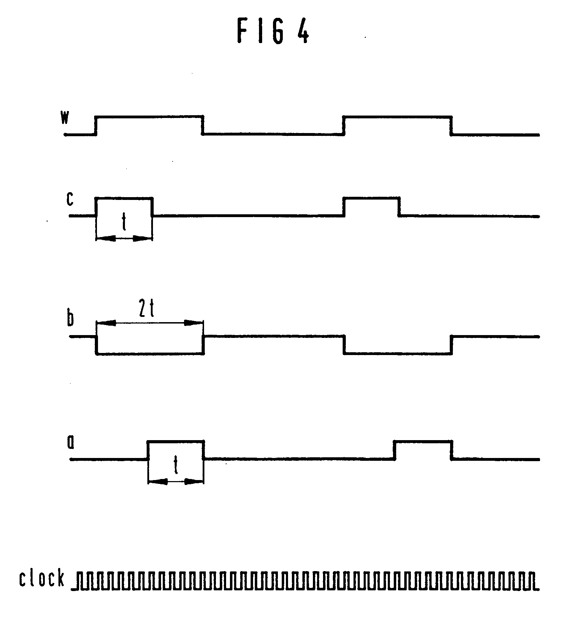

Die Contention-Unit PCU der Einrichtung PICU umfaßt eine Mehrzahl von Contention-Zellen CC (Contention Cell), welche ebenso zu einem Array CCA (Contention Cell Array) zusammengefaßt sind. Die Anzahl der Zellen CC in der Contention-Unit PCU und die Anzahl der Zellen IC in der Prozeßinitialisierungseinheit PIU sind voneinander unabhängig. Jede Contention-Zelle CC weist eine bestimmte Anzahl von Bits auf, nämlich eine Anzahl n+1 t-Bits, welche die durch Addition mit dem Zähler C_{UP} erhaltene Absolutzeitinformation enthalten, bis wann der Task zu verarbeiten ist, alle i-Bits und f-Bits der Initialisierungszelle und weiters ein r-Bit, welches angibt, ob die zugeordnete Contention-Zelle frei oder besetzt ist. Bei dem vorliegenden Ausführungsbeispiel sind die Anzahl und der Inhalt der t-Bits der Initialisierungszelle und der t-Bits der Contention-Zelle unterschiedlich, da die t-Bits in der Initialisierungszelle IC eine Relativzeitinformation enthalten, wogegen die Contention-Zelle eine Absolutzeitinformation enthält, die durch Addition der Relativzeitinformation mit dem Momentanwert des Zählers Cup erhalten wird. Bei dem dargestellten Ausführungsbeispiel weist die Contention-Unit weiters einen Arbiter A auf, welcher einen Vergleich der in den t-Bits der belegten Contention-Zellen CC gespeicherten Zeitablaufinformationen durchführt, um jene Zelle zu ermitteln, deren Zeitablaufinformation den geringsten Wert besitzt. Eine genauere Beschreibung der Funktion dieses Arbiters erfolgt weiter unten mit Bezug auf die Figuren 3 und 4. Der Arbiter A ist mittels einer Interrupt-Signalleitung IRINW (Interrupt Request Indicating New Winner) und einer Interrupt-Signalleitung IRIO (Interrupt Request Indicating Overloading) mit dem Prozessor CPU der Datenverarbeitungsanlage verbunden.

Bei dem vorliegenden, bevorzugten Ausführungsbeispiel mit den Zähler C_{UP} können sowohl die Prozeßinitialisierungseinheit PIU als auch die Contention-Unit PCU analog zu einem statischen RAM hergestellt werden. Da hiefür eine geringere Anzahl von Transistoren erforderlich ist, ergibt sich gegenüber üblichen binären Zählern eine vereinfachte und kostengünstige Herstellung der Einrichtung. Die vorliegende Erfindung ist jedoch keineswegs auf dieses Ausführungsbeispiel eingeschränkt. Im Rahmen der Erfindung sind auch alle anderen, für diesen Zweck geeigneten Prozeßinitialisierungseinheiten und Contention-Units umfaßt.

Die Prozeßinitialisierungseinheit PIU ist über eine Leitung FREE CELL und einen internen Datenbus IDB (Internal Data Bus) mit der Contention-Unit PCU der Einrichtung PICU verbunden. Mit der Leitung FREE CELL wird unter Zuhilfenahme des r-Bits der Contention-Zellen CC überprüft, ob eine solche Zelle der Contention-Unit für einen Eintrag verfügbar ist, daß heißt festgestellt, ob sie frei oder besetzt ist. Über den internen Datenbus IDB können die t-, i- und f-Bits von der PIU zur PCU übermittelt werden.

Zur Kommunikation mit dem Prozessor CPU der Datenverarbeitungsanlage ist weiters eine Übermittlungseinheit ADAWSG (Address Decode And Wait State Generation Unit) vorgesehen, die an den internen Adreß- und Datenbus einerseits und an den CPU Adreß- und Datenbus andererseits angeschlossen ist. Weiters besitzt die Übermittlungseinheit ADAWSG einen Zugang zu der Leitung FREE CELL. Die Prozeßinitialisierungseinheit PIU ist mit der Übermittlungseinheit ADAWSG über eine Signalleitung ACCESS DISABLE verbunden, um zu verhindern, daß der Prozessor CPU während der Initialisierung oder der Eintragung einer Zelle durch die Prozeßinitialisierungseinheit PIU auf die Contention-Unit PCU zugreift. Das Signal der Leitung ACCESS DISABLE wird durch die Übermittlungseinheit ADAWSG in ein Signal umgewandelt, welches zum ARDY Eingang (Asynchronous Ready) des Prozessors CPU führt. Weiters ist die Übermittlungseinheit an die Ausgänge PCS (Peripheral Chip Select) und R/W des Prozessors angeschlossen.

Die Anzahl der Bits des internen Adreßbus der Einrichtung PICU wird in zwei Abschnitte aufgeteilt, nämlich in einen Abschnitt c, durch welchen die Zellen in der Prozeßinitialisierungseinheit oder der Contention-Unit adressiert werden, und in einen Abschnitt s, durch welchen die Teilbereiche innerhalb einer Zelle (t-Bits, i-Bits, f-Bits) adressiert werden. Auch der Adreßbus zur CPU kann auf diese Weise in zwei Abschnitte, nämlich einen Abschnitt c und einen Abschnitt s unterteilt werden.

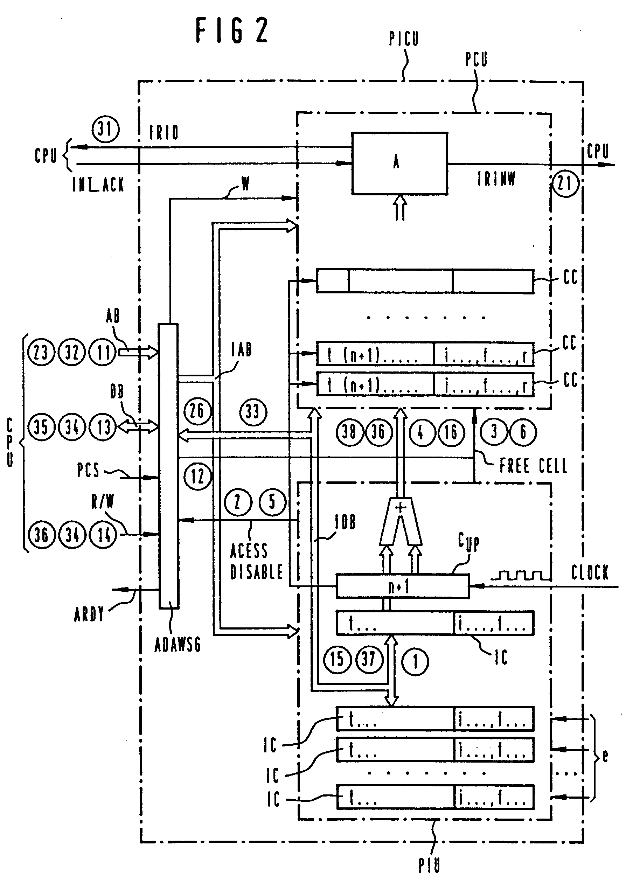

Im folgenden werden unter Bezugnahme auf die Figur 2 typische Verfahrensabläufe der oben beschriebenen Einrichtung näher erläutert und zwar einerseits für den Fall A), bei welchem ein externer Event die Verarbeitung eines Tasks signalisiert, und andererseits für den Fall B), bei welchem ein Subtask durch den Prozessor generiert wird. Die im folgenden in Klammern angegebene Numerierungen entsprechen den in Figur 2 angegebenen Ziffern.
A) Nach Anliegen eines externen Events, z.B. Event e, an einer der dafür vorgesehenen Signalleitungen der Prozeßinitialisierungseinheit PIU werden folgende Arbeitsschritte ausgeführt:
   (1) Die n vorcodierten t-Bits der für den angeforderten Task vorgesehenen Initialisierungszelle IC werden in ein Addierregister geladen.
   (2) An der Übermittlungseinheit ADAWSG wird das Signal ACCESS DISABLE gesetzt, sodaß der Prozessor CPU solange keinen Zugriff auf die Contention-Unit PCU erhält, bis die Initialisierung des angeforderten Tasks beendet ist. Wenn an der Einheit ADAWSG ein PCS-Signal von der CPU einlangt, wird durch die ADAWSG-Einheit als Reaktion auf das Signal ACCESS DISABLE das ARDY-Signal gesetzt.
   (3) Zugleich wird durch die Prozeßinitialisierungseinheit das Signal FREE CELL gesetzt, um die darauffolgenden Schreibvorgänge an einer leeren Contention-Zelle (mit rückgesetztem r-Bit) vornehmen zu können.
   (4) Der in den n t-Bits enthaltene Wert für den Zeitablauf wird zum Inhalt des n Bit breiten Zählers C_{UP} addiert. Die Addition ergibt ein n+1 Bit Ergebnis, welches eine Absolutzeitinformation darstellt, die in die n+1 t-Bits der freien Contention-Zelle geschrieben wird. Der Inhalt der i-Bits und der f-Bits der Initialisierungszelle werden unverändert in die entsprechenden i- und f-Bits der Contention-Zelle geschrieben.
   (5) Das Signal ACCESS DISABLE wird danach durch die Prozeßinitialisierungseinheit PIU wieder rückgesetzt, um einen Zugriff auf die Contention-Unit durch den Prozessor CPU wieder freizugeben. Falls inzwischen eine PCS-Anforderung vorlag, wird durch die Übermittlungseinheit ADAWSG das ARDY-Signal rückgesetzt.
   (6) Ebenso wird durch die Prozeßinitialisierungseinheit PIU das Signal FREE CELL rückgesetzt.
(B) Bei Vorliegen eines internen Events, das heißt, wenn ein Task durch einen anderen Task angefordert wird, werden die folgenden Schritte ausgeführt:
   (11) An den Adreßbus des Prozessors CPU wird ein reservierter Code angelegt, z.B. 0xFF in Abschnitt c, um anzuzeigen, daß eine freie Zelle angefordert wird. Ebenso wird ein Pointer auf die t-Bits in den Abschnitt s des Adreßbus gelegt.
   (12) Die Übermittlungseinheit ADAWSG erzeugt daraufhin ein FREE CELL Signal, welches an den FREE CELL Eingang der Contention-Unit angelegt wird, sofern nicht an der Einheit ADAWSG das Signal ACCESS DISABLE angezeigt ist.
   (13) Der Wert der t-Bits wird an den CPU Datenbus gelegt.
   (14) An dem R/W Eingang der ADAWSG-Einheit wird das WRITE-Signal gesetzt.
   (15) Der Inhalt der n t-Bits wird in das Addierregister der Prozeßinitialisierungseinheit PIU geladen. Falls die Anzahl der t-Bits größer als die Breite des Datenbus ist, werden die Schritte (11) bis (15) wiederholt, bis alle n t-Bits in das Addierregister geladen sind.
   (16) Die n t-Bits werden mit dem Inhalt des n Bit breiten Zählers C_{UP} zu einem Ergebnis addiert, welches in die n+1 t-Bits einer freien Zelle geschrieben wird. Die i- und die f-Bits werden analog zu den Schritten (11) bis (16) direkt in die betreffende Contention-Zelle geschrieben.

Da der Zeitpunkt, zu welchem die Verarbeitung eines Tasks spätestens abgeschlossen sein muß, beim Erstellen der Contention-Zelle CC für diesen Task bereits festgelegt wird, verändert sich der Inhalt der Contention-Unit PCU nur dann, wenn eine Contention-Zelle CC neu erstellt bzw. gelöscht wird oder wenn sich der Zustand einer bestehenden Contention-Zelle CC verändert. Beispielsweise kann durch eine Veränderung der f-Bits einer Contention-Zelle ein Unterdrücken oder eine Wiederaufnahme der Teilnahme an dem Vergleich der t-Bits durch den Arbiter A herbeigeführt werden oder es kann durch eine Veränderung der t-Bits einer bestehenden Contention-Zelle CC die Zeitablaufinformation des zugeordneten Tasks geändert werden. Mit anderen Worten, die Prioritätszuteilung auf die zur Verarbeitung anliegenden Tasks kann sich nur dann ändern, wenn sich der Inhalt der Contention-Unit verändert. Alle Veränderungen an der Contention-Unit werden von der Hardware durch einen Schreib-Zugriff auf die Contention-Unit realisiert. Das heißt, ein Vergleich der t-Bits aller belegten Zellen in der Contention-Unit, um festzustellen, welche Contention-Zelle die geringste Zeitablaufinformation enthält, und gegebenenfalls das Senden eines Interrupt-Requests an den Prozessor CPU, muß nur dann durchgeführt werden, wenn ein Schreib-Zugriff auf die Contention-Unit stattgefunden hat. Zu allen anderen Zeitpunkten kann die Contention-Unit PCU und der Arbiter A für andere Zwecke genutzt werden.

Mit Bezug auf die Figuren 3 und 4 wird im folgenden auf den logischen Aufbau und die Funktion des Arbiters näher eingegangen, wobei in Figur 3 die Arbiterlogik am Beispiel von drei Contention-Zellen mit einer Mehrzahl von f-Bits, einem r-Bit und einer Mehrzahl von t-Bits im Detail dargestellt ist, wogegen Figur 4 typische Zeitverläufe unterschiedlicher Signale der Arbiterlogik von Figur 3 zeigt. Die i-Bits der Contention-Zellen sind in Figur 3 der Übersicht halber nicht dargestellt, da sie keinen Einfluß auf die Funktion des Arbiters haben.

Als Reaktion auf ein Schreib-Signal an der Leitung w der Contention-Unit wird für eine bestimmte Zeit an der Leitung c ein Signal auf High gesetzt. Die Zeitdauer für das High-Signal ist von der Signalverzögerung innerhalb des Arbiters abhängig. Das Signal der Leitung c ist logisch über ein UND-Gatter mit der Ausgabe einer logischen Funktion PLA (Program Logical Array) verknüpft. Die Funktion PLA ist eine logische Verknüpfung aller f-Bits einer Contention-Zelle CC und gibt durch ihre Ausgabe (0 oder 1) an, ob diese Contention-Zelle derzeit an dem Vergleich der t-Bits durch den Arbiter teilnimmt oder nicht. Das High-Signal an c bewirkt, daß die Ausgabe an den dynamischen Flip-Flops D-FF des Arbiters A nur jene Zellen CC der Contention-Unit erfaßt, die belegt sind und deren f-Bits (PLA-Funktion) die Teilnahme an diesem Vergleich erlauben. Figur 3 ist weiters zu entnehmen, daß der Ausgang nur jenes Flip-Flops D-FF null werden kann, welcher der Zelle mit der geringsten Zeitablaufinformation zugeordnet ist. Der soeben beschriebene Betriebsmodus des Arbiters dient dazu, festzustellen, welche der belegten (r-Bit = gesetzt) und aktiven (PLA-Funktion = 1) Contention-Zellen die kürzeste Zeitablaufinformation enthält und somit gemäß dem EDF-Prinzip die höchste Priorität erhält. Dieser Betriebsmodus des Arbiters wird im folgenden kurz Prioritätszuteilung genannt.

Zu allen anderen Zeiten, das heißt, wenn kein Schreib-Zugriff auf die Contention-Unit stattfindet, ist das Signal c auf Low gesetzt. Das Low-Signal auf c bewirkt, daß alle belegten Zellen der Contention-Unit unabhängig von dem durch die PLA-Funktion angezeigten Zustand an dem Vergleich der in den t-Bits enthaltenen Zeitablaufinformation teilnehmen. Das Ergebnis dieses Vergleiches wird in einen n-Bit breiten Komparator COMP geladen und mit dem Wert des Zählers C_{UP} verglichen. Sobald der Wert des Zählers größer als die soeben ermittelte geringste Zeitablaufinformation aller belegten Zellen der Contention-Unit ist, wechselt die Ausgabe des Komparators COMP von Low auf High. Dies bedeutet, daß der Prozessor einen Task nicht zu seinem vorgesehenen Zeitpunkt verarbeiten kann und der Arbiter A sendet einen Interrupt-Request Overloading-Indication IRIO an den Prozessor CPU, um dem Prozessor diesen Zustand anzuzeigen. Dadurch, daß alle in der Contention-Unit eingetragenen Zellen an diesem Vergleich beteiligt sind, wird in besonders einfacher Weise zusätzlich auch die Einhaltung der in den inaktiven Contention-Zellen enthaltenen Zeitablaufinformationen überwacht, die z.B. aufgrund einer Intertask-Kommunikation vorerst nicht zur Verarbeitung zugelassen sind. Dieser Betriebsmodus des Arbiters wird im folgenden kurz Overloading-Anzeige genannt.

In Figur 4 sind die zeitlichen Verläufe der verschiedenen Signale des Arbiters A von Figur 3 für die zwei oben beschriebenen Betriebsarten (Prioritätszuteilung bzw. Overloading-Anzeige) dargestellt. Wenn ein Schreib-Zugriff auf eine der Contention-Zellen stattfinden soll, wird die Leitung w auf High gesetzt. Mit der Aufsteigenden Flanke des Signals an w geht der Arbiter in den Betriebsmodus für die Prioritätszuteilung über, bei welchem ein Vergleich der Zeitablaufinformationen nur jener Zellen stattfindet, welche nicht durch das Ergebnis der PLA-Funktion von diesem Vergleich ausgeschlossen sind. Zugleich mit dem High-Signal an der Leitung w wird zu diesem Zweck an der Leitung c ein High-Signal angelegt, um die Wirkung der f-Bits zu aktivieren. Dieses High-Signal an c ist für die Zeitdauer t angelegt, welche die für einen Schreib-Zugriff auf eine Contention-Zelle erforderliche Zeitdauer plus der Signalverzögerung durch die Arbiterlogik ist. Nach einer weiteren Zeitdauer t, das heißt mit der abfallenden Flanke des Signals an der Leitung c wird an der Leitung a ein Signal auf High gesetzt, um das durch die in Figur 3 dargestellte logische Verknüpfung erhaltene Ergebnis des Vergleichs der t-Bits aller zugelassenen Zellen in je ein D-FF des Arbiters zu latchen. Wenn sich das Ergebnis der logischen Verknüpfung der Flip-Flops D-FF des Arbiters A ändert, wird an der Leitung IRINW ein Interrupt-Request an den Prozessor CPU gerichtet. Um zu vermeiden, daß die Prioritätszuteilung den Betriebsmodus für die Overloading-Anzeige beeinflußt, wird zugleich, das heißt, ebenso an der steigenden Flanke des High-Signals an der Leitung c und für die Zeitdauer 2t, eine Leitung b auf Low gesetzt, die den Takt blockiert, welcher das Ergebnis des Komparators COMP in ein für die Overloading-Anzeige vorgesehenes Flip-Flop RS-FF latched. Nach Verstreichen der Zeitdauer t wird diese Blockierung durch die Leitung b wieder aufgehoben.

An der steigenden Flanke des Signals an der Leitung b geht der Arbiter A wieder in den Betriebsmodus für die Overloading-Anzeige über, bei welchem ein periodischer Vergleich aller belegten Zellen der Contention-Unit, unabhängig von dem durch die f-Bits (PLA-Funktion) angezeigten Zustand der Zellen stattfindet. Dies wird durch das Signal Low an der Leitung c realisiert. Die Blockierung des Taktes, mit welchem das Ergebnis des Komparators COMP (High oder Low) in das Flip-Flop RS-FF gelatched wird, ist durch ein High Signal an der Leitung b aufgehoben. Um zu Verhindern, daß dieser Betriebsmodus die Prioritätszuteilung beeinflußt, ist durch ein Low-Signal an der Leitung a sichergestellt, daß im Betriebsmodus Overloading-Anzeige keine Ausgabe der Arbiterlogik in die Flip-Flops D-FF gelatched werden kann.

Die in Figur 3 im Detail dargestellte logische Verknüpfung der einzelnen Bits der Contention Zellen durch die Arbiterlogik ist für einen Fachmann aus der Zeichnung verständlich und wird im folgenden nicht näher erläutert.

Wenn in dem oben beschriebenen Betriebsmodus Prioritätszuteilung des Arbiters A bei einem Vergleich der Zeitablaufinformationen festgestellt wird, daß die soeben ermittelte Contention-Zelle mit der geringsten Zeitablaufinformation eine andere ist wie bei dem zuletzt vorgenommenen Vergleich, das heißt, wenn eine neue Siegerzelle CC der Contention-Unit PCU ermittelt wurde, werden folgende weitere Schritte ausgeführt (vgl. Fig. 2):
(21) An der Interrupt-Leitung IRINW wird ein Interrupt an den Prozessor CPU übermittelt, um einen Task-Wechsel herbeizuführen.
(25) Als Reaktion auf die Interrupt-Anforderung in (21) wird durch den Prozessor CPU ein reservierter Code in den c-Abschnitt des CPU-Adreßbus gelegt, z.B. 0x00, um anzuzeigen, daß der Prozessor CPU die i-Bits der Siegerzelle lesen möchte. An den s-Abschnitt des Adreßbus wird die auf die i-Bits der Siegerzelle zeigende Adresse angelegt.
(26) Falls nicht das Signal ACCESS DISABLE an die Übermittlungseinheit ADAWSG angelegt ist (Contention-Unit wird gerade durch die Initialisierungseinheit benutzt), werden an dem R/W Eingang dieser Einheit das READ Signal gesetzt und die i-Bits der Sieger-Zelle gelesen. Der Inhalt der i-Bits wird dazu verwendet, um die zur Verarbeitung des zugehörigen Tasks erforderlichen Informationen im Task Control Block der Datenverarbeitungsanlage aufzufinden. In gleicher Weise wird die Adresse der Siegerzelle gelesen, da sie möglicherweise später für eine Intertask-Kommunikation benötigt wird, bei welcher die f-Bits der Contention-Zelle geändert werden.

Wenn im Betriebsmodus Overloading-Anzeige durch ein High Signal am Ausgang des Komparators COMP festgestellt wird, das ein Task nicht rechtzeitig verarbeitet werden konnte, werden die folgenden weiteren Schritte ausgeführt:
(31) An der Interrupt-Leitung IRIO wird ein Interrupt-Request an den Prozessor CPU übermittelt, um einen Overload-Zustand anzuzeigen.
(32) ein vorbestimmter Code, z.B. 0xFF) wird an den c-Abschnitt des Adreßbus angelegt, um anzugeben, daß nun die Zelle zu bearbeiten ist, welche das Overloading-Signal ausgelöst hat. Um festzustellen, welche Zelle das Overloading-Signal ausgelöst hat, wird das Signal Interrupt Acknowledge INT_ACK dazu benutzt, das Ergebnis des Arbiters in die Flip-Flops D-FF zu latchen. Zu diesem Zeitpunkt ist die Leitung IRINW blockiert.
(33) die i-Bits der Zelle, die das Overloading-Signal ausgelöst hat, wird durch die ADAWSG gelesen und
(34) an der R/W-Leitung wird das READ-Signal gesetzt, um dem Prozessor CPU diese i-Bits zu übermitteln, wo sie von einer Voreloading-Handling-Interrupt-Routine analysiert werden. Diese Routine nimmt alle erforderlichen Handlungen vor, z.B. wenn festgestellt wird, daß der Task für die Verarbeitung des zugehörigen Prozesses länger als 2ⁿ Taktperioden benötigt (n=Breite des Counters Cup), wird die Interrupt-Routine die t-Bits der zugeordneten Contention-Zelle neu berechnen, sodaß der verbleibende Code gemäß EDF weiterverarbeitet werden kann (vgl. Fig. 3).

Zur Veränderung der t-Bits einer Contention-Zelle werden die folgenden Schritte ausgeführt:
(35) der geänderte Inhalt der t-Bits wird an den CPU Datenbus angelegt.
(36) an der Leitung R/W wird das WRITE Signal gesetzt.
(37) der Inhalt der t-Bits wird in das Addierregister geladen.
(38) der Inhalt der t-Bits wird mit dem Inhalt des Zählers C_{UP} zu einem n+1 Bit Ergebnis addiert, welches in die t-Bits der entsprechenden Contention-Zelle geschrieben wird.

Auf diese Weise kann innerhalb dieser Architektur z.B. auch eine Endlosschleife realisiert werden.

Der n-Bit Zähler C_{UP} wird nach 2ⁿ·p Zeiteinheiten einen Overflow anzeigen. Dieser Overflow wird dazu benutzt, um das MSB (Most Significant Bit) der t-Bits aller besetzten Contention-Zellen CC zurückzusetzen, wonach die Absolutzeitinformation aller Zellen der Contention-Unit PCU wieder mit dem Zähler C_{UP} synchronisiert sind.

In jeder Contention-Zelle CC sind eine Mehrzahl von f-Bits vorgesehen, um eine Intertask-Kommunikation zu ermöglichen, wie z.B. Semaphore, Event Flags oder Message Boxes. Durch die f-Bits wird eine logische Funktion PLA definiert, deren Ergebnis (0 oder 1) angibt, ob die zugeordnete Zelle der Contention-Unit PCU an dem Vergleich der t-Bits durch den Arbiter A teilnimmt oder nicht. Im folgenden werden Verfahrensabläufe am Beispiel einer Semaphore und Message Box näher erläutert.

Semaphores können mittels einem Array, bestehend aus mehreren Strukturen mit je zwei Elementen verwaltet werden. Jede Struktur ist durch die Semaphore-Identifikation indiziert. Das erste Element jeder Struktur dieses Arrays ist ein Flag, welches angibt, ob der Semaphore gesetzt ist oder nicht. Das zweite Element ist eine Liste, welche die Indizes jener Contention-Zellen enthält, deren zugeordnete Tasks auf diesen Semaphore warten.

Zum Setzen der Semaphore mit der Identifikation id=i werden die folgenden Verfahrensschritte vorgenommen: Falls das erste Element der i-ten Struktur anzeigt, daß der Semaphore nicht gesetzt ist, wird diesem Element ein Wert zugeordnet, welcher einen gesetzten Semaphore anzeigt und der Task läuft weiter. Ansonsten wird der Zellenindex des gerade bearbeiteten Tasks in die Liste des zweiten Elements der i-ten Struktur geschrieben und das zugeordnete f-Bit dieses Tasks gesetzt. Ob der laufende Task nun von dem Vergleich der t-Bits durch den Arbiter ausgeschlossen wird oder nicht, hängt von dem Ergebnis der oben angesprochenen logischen Funktion PLA ab.

Zum Zurücksetzen der Semaphore mit der Identifikation id=i sind hingegen die folgenden Verfahrensschritte erforderlich: Auffinden der i-ten Struktur in dem Array und, falls die Liste des zweiten Elementes leer ist, Zuordnen eines Wertes des ersten Elementes dieser Struktur, der einen zurückgesetzten Semaphore anzeigt, ansonsten Zurücksetzen des zugeordneten f-Bits in der Contention-Zelle, deren Index durch den ersten Eintrag in der Liste des zweiten Elementes der i-ten Struktur angegeben ist.

In ähnlicher Weise können zwischen Prozessen Messages ausgetauscht werden. Jede Message Box unterstützt zwei Listen. Eine erste Liste mit Zellen-Indizes von Prozessen, die auf eine Message warten, zusammen mit einer Adresse (= Datenzeiger), an welcher die Message erwartet wird, und eine zweite Liste mit Message-Daten. Die Strukturen der Message-Boxes sind ebenso als ein Array organisiert. Jede Message Box ist durch eine Message-Box-Nummer indiziert.

Wenn ein Prozeß eine Message von einer Message Box mit der Nummer m empfangen will, wird er das m-te Glied des Arrays aufsuchen. Falls die Liste der Message-Daten nicht leer ist, wird der erste Eintrag aus der Liste entnommen und in eine eigene Variable kopiert. Der Prozeß kann somit weiterlaufen. Falls die Liste der Message-Daten jedoch leer ist, wird der Zellenindex des Prozesses an die erste Stelle und die Adresse (= Datenzeiger) einer Lokalen Variable, wo er seine Message empfangen wird, an die zweite Stelle der ersten Liste eingetragen. An dieser Stelle muß der Prozeß auf die Message warten und wird das entsprechende f-Bit der zugeordneten Contention-Zelle setzen, um diesen Prozeß von dem nächsten Vergleich der t-Bits auszuschließen, so daß automatisch ein Task-Wechsel herbeigeführt wird.

Wenn ein Prozeß eine Message in die Message Box mit der Nummer m senden will, wird er ebenso das m-te Glied des Arrays aufsuchen. Falls der Zellenindex nicht leer ist, wird die Message an die Stelle kopiert, die durch den Datenzeiger an der zweiten Stelle der ersten Liste angegeben ist. Danach wird das f-Bit der zugehörigen Contention-Zelle rückgesetzt, um eine Teilnahme dieser Zelle an dem nächstfolgenden Vergleich der t-Bits zu ermöglichen. Falls der Zellenindex jedoch leer ist, werden die Daten einfach in die Message-Daten-Liste der m-ten Struktur eingetragen.

Ein Vorteil der erfindungsgemäßen Einrichtung liegt daher unter anderem auch darin, daß die Einrichtung PICU zusätzlich zur dynamischen Prioritätszuteilung und Overloading-Anzeige auch die Verwaltung von Semaphores und Mail Boxes übernimmt. Dadurch kann das Betriebssystem weiter entlastet und die Prozessorauslastung gesteigert werden.

Abschließend ist jedoch festzuhalten, daß die vorliegende Erfindung nicht auf das erläuterte Ausführungsbeispiel eingeschränkt ist. Anstelle des Vergleichs von Absolutzeitinformationen durch einen Arbiter kann bei einer hier nicht dargestellten Ausführungsform einer erfindungsgemäßen Einrichtung jede Contention-Zelle durch je einen binären, nach unten zählenden Zähler realisiert werden, in welchen die relative Zeitablaufinformation eines Prozesses eingetragen wird, so daß die Zeitablaufinformation jeder Contention-Zelle entsprechend der Taktrate eines nach unten zählenden Zählers verringert wird. Durch die binären Zähler entstehen zwar etwas höhere Herstellungskosten, die bei kleineren PICU-Einrichtungen jedoch dadurch kompensiert werden können, daß kein Addierregister zum Berechnen der Absolutzeitinformation benötigt wird und die Arbiterlogik einfacher aufgebaut sein kann.

## Patentansprüche

1. Verfahren zur Verarbeitung einer Mehrzahl von Tasks durch einen Prozessor einer Echtzeit-Datenverarbeitungseinrichtung, in welcher jeder Task nach einer dynamisch zugordneten Priorität einzeln und innerhalb einer vorbestimmten Zeitperiode in einem Prozessor zu verarbeiten ist,
**dadurch gekennzeichnet,**
- daß für jeden durch den Prozessor zu verarbeitenden Task eine Initialisierungszelle (IC)
-- mit einer Anzahl von t-Bits, welche eine Zeitablaufinformation enthalten, die angibt innerhalb welcher Zeit die Verarbeitung des jeweiligen Tasks zu erfolgen hat, sowie
-- mit einer Anzahl von i-Bits, welche eine auf einen Task Control Block der Datenverarbeitungsanlage verweisende Indexinformation enthalten,
erstellt wird,
- daß eine erstellte Initialisierungszelle (IC) in eine freie Contention-Zelle (CC) einer Contention-Unit (PCU) eingetragen wird,
- daß die Zeitablaufinformationen der in die Contention-Unit (PCU) eingetragenen Initialisierungszellen (CC) verglichen werden, um jenen Task zu ermitteln, der die kleinste Zeitablaufinformation aufweist, und
- daß ein Interrupt-Signal (IRINW) an den Prozessor (CPU) gesendet wird, um die Verarbeitung des aktuell ermittelten Task einzuleiten, sofern der ermittelte Task nicht mit dem zuvor ermittelten Task übereinstimmt, der gerade durch den Prozessor (CPU) verarbeitet wird.

2. Verfahren nach Anspruch 1, **dadurch gekennzeichnet, daß** die Initialisierungszelle (IC) durch eine Prozeßinitialisierungseinheit (PIU) erstellt wird, in welcher für jeden zugelassenen externen Event, der einen Task zur Verarbeitung durch den Prozessor (CPU) signalisieren kann, eine Initialisierungszelle (IC) mit vorcodierten oder durch den Prozessor (CPU) initialisierten t-Bits enthalten ist.

3. Verfahren nach Anspruch 1, **dadurch gekennzeichnet, daß** für einen zu verarbeitenden internen Task, z.B. einen Subtask, die t- und i-Bits für eine Contention-Zelle (CC) durch den Prozessor (CPU) erstellt und in die Contention-Unit (PCU) eingetragen werden.

4. Verfahren nach einem der Ansprüche 1 bis 3, **dadurch gekennzeichnet, da**ß in jeder Contention-Zelle (CC) der Contention-Unit (PCU) ein r-Bit vorgesehen ist, welches angibt, ob sie belegt ist oder nicht **und daß** vor Eintragen einer Initialisierungszelle (IC) in eine Contention-Zelle (CC) der Contention-Unit (PCU) das r-Bit überprüft wird, um festzustellen, ob die Contention-Zelle frei ist oder nicht.

5. Verfahren nach einem der Ansprüche 1 bis 4, **dadurch gekennzeichnet, daß** zu der in den t-Bits einer Initialisierungszelle (IC) enthaltenen relativen Zeitinformation vor Eintragen dieser Zelle in eine freie Contention-Zelle (CC) der Contention-Unit (PCU) der Wert eines nach oben zählenden Zählers (C_{UP}) addiert wird, um eine Absolutzeitinformation zu generieren, welche in die t-Bits der Contention-Zelle (CC) eingetragen wird.

6. Verfahren nach einem der Ansprüche 1 bis 4, **dadurch gekennzeichnet, daß** die in den t-Bits einer Initialisierungszelle enthaltene relative Zeitinformation direkt in eine freie Contention-Zelle der Contention-Unit eingetragen wird **und daß** der Inhalt der t-Bits aller Contention-Zellen entsprechend der Taktrate eines nach unten zählenden Zählers verringert wird.

7. Verfahren nach einem der Ansprüche 1 bis 6, **dadurch gekennzeichnet, daß** jede Contention-Zelle (CC) der Contention-Unit (PCU) f-Bits enthält, welche für eine Intertask-Kommunikation, z.B. Semaphore, Event Flags oder Message Boxes, vorgesehen sind, durch welche die Teilnahme einer Contention-Zelle (CC) an dem Vergleich der in den t-Bits enthaltenen Zeitablaufinformationen vorübergehend unterdrückt werden kann.

8. Verfahren nach einem der Ansprüche 1 bis 7, **dadurch gekennzeichnet, daß** das Vergleichen der Zeitablaufinformationen der Contention-Zellen (CC) nur dann durchgeführt wird, wenn ein Schreib-Zugriff auf die Contention-Unit (PCU) stattgefunden hat, der den Zustand zumindest einer Contention-Zelle (CC) verändert hat.

9. Verfahren nach Anspruch 8, **dadurch gekennzeichnet, daß** unabhängig vom Zustand der Contention-Zellen (CC) weiters periodisch ein Vergleich der Zeitablaufinformationen aller belegten Contention-Zellen (CC) durchgeführt wird, um ein Overloading anzuzeigen, sobald festgestellt wird, daß ein Task nicht innerhalb der in den t-Bits vorgegebenen Zeit verarbeitet worden ist.

10. Einrichtung zur Verarbeitung einer Mehrzahl von Tasks innerhalb einer vorbestimmten Zeitperiode in einem Prozessor nach einer dynamisch zugeordneten Priorität,
**dadurch gekennzeichnet,**
- daß sie für jeden zu verarbeitenenden Task Mittel (PIU,CPU) zum Erstellen einer Initialisierungszelle (IC) aufweist, bestehend aus einer Anzahl von t-Bits, welche eine Zeitablaufinformation enthalten, die angibt innerhalb welcher Zeit die Verarbeitung des jeweiligen Tasks zu erfolgen hat, sowie einer Anzahl von i-Bits, welche eine auf einen Task Control Block der Datenverarbeitungsanlage verweisende Indexinformation enthalten,
- daß sie Mittel zum Eintragen jeder erstellten Initialisierungszelle (IC) in eine freie Contention-Zelle (CC) einer Contention-Unit (PCU) aufweist,
- daß sie Mittel (A) zum Vergleichen der eingetragenen Zeitablaufinformationen aufweist, um jenen Task zu ermitteln, dessen Zeit, bis er zu verarbeiten ist, am frühesten abläuft, und
- daß sie Mittel (A) zum Senden eines Interrupt-Signals (IRINW) an den Prozessor (CPU) aufweist, um die Verarbeitung des ermittelten Task einzuleiten, sofern der ermittelte Task nicht mit dem zuvor ermittelten Task übereinstimmt, der gerade durch den Prozessor (CPU) verarbeitet wird.

11. Einrichtung nach Anspruch 10, **dadurch gekennzeichnet, daß** das Mittel zum Erstellen einer Initialisierungszelle (IC) eine Prozeßinitialisierungseinheit (PIU) ist, in welcher für einen zu verarbeitenden externen Task eine Initialisierungszelle (IC) mit vorcodierten oder durch den Prozessor (CPU) initialisierten t-Bits vorgesehen ist.

12. Einrichtung nach Anspruch 10, **dadurch gekennzeichnet, daß** das Mittel zum Erstellen einer Initialisierungszelle der Prozessor (CPU) selbst ist, z.B. um einen Subtask zu generieren.

13. Einrichtung nach einem der Ansprüche 10 bis 12, **dadurch gekennzeichnet, daß** sie Mittel (FREE CELL) zum Überprüfen eines r-Bits der Contention-Zellen (CC) aufweist, welches angibt, ob sie belegt ist oder nicht.

14. Einrichtung nach Anspruch 13, **dadurch gekennzeichnet, daß** sie weiters Mittel zum Setzen und Rücksetzen von f-Bits jeder Contention-Zelle (CC) der Contention-Unit (PCU) aufweist, welche für eine Intertask-Kommunikation, z.B. Semaphore, Event Flags oder Message Boxes, vorgesehen sind, durch welche die Teilnahme einer Contention-Zelle (CC) an dem Vergleich der in den t-Bits enthaltenen Zeitablaufinformationen vorübergehend unterdrückt werden kann.

15. Einrichtung nach einem der Ansprüche 10 bis 14, **dadurch gekennzeichnet, daß** sie Mittel zum Addieren des Inhaltes eines nach oben zählenden Zählers (C_{UP}) zu der in den t-Bits einer Initialisierungszelle (IC) enthaltenen relativen Zeitablaufinformation aufweist, um eine Absolutzeitinformation zu generieren, welche in die t-Bits der zugeordneten Zelle (CC) der Contention-Unit (PCU) eingetragen wird.

16. Verfahren nach einem der Ansprüche 10 bis 14, **dadurch gekennzeichnet, daß** sie Mittel zum Verringern der in den t-Bits jeder Contention-Zelle enthaltenen relativen Zeitablaufinformation entsprechend der Taktrate eines nach unten zählenden Zählers aufweist.

17. Einrichtung nach Anspruch 15, **dadurch gekennzeichnet, daß** sie Mittel (COMP) zum Vergleichen der geringsten Zeitablaufinformation aller belegten Contention-Zellen (CC) mit dem nach oben zählenden Zähler (C_{UP}) aufweist, um ein Overloading anzuzeigen, falls der Wert der geringsten Zeitablaufinformation geringer als der Wert des Zählers (C_{UP}) ist.

18. Einrichtung nach Anspruch 16, **dadurch gekennzeichnet, daß** sie Mittel zum Anzeigen eines Overloading-Zustandes aufweist, falls der Wert der eine geringste Wartezeit repräsentierende Zeitablaufinformation den Wert Null erreicht hat.

19. Einrichtung nach einem der Ansprüche 17 oder 18, **dadurch gekennzeichnet, daß** weiters Mittel (b) zum Blockieren der Overloading-Anzeige vorgesehen sind.

20. Einrichtung nach einem der Ansprüche 10 bis 19, **dadurch gekennzeichnet, daß**
- die Mittel zum Vergleichen der in den t-Bits der Contention-Zellen (CC) enthaltenen Zeitablaufinformation,
- die Mittel (FREE CELL) zum Überprüfen eines r-Bits der Contention-Zellen (CC),
- Mittel zum Überprüfen von f-Bits jeder Contention-Zelle (CC) der Contention-Unit (PCU),
- die Mittel (COMP) zum Vergleichen der geringsten Zeitablaufinformation aller belegten Contention-Zellen (CC) mit dem nach oben zählenden Zähler (C_{UP}),
- die Mittel zum Anzeigen eines Overloading-Zustandes und
- die Mittel (b) zum Blockieren der Overloading-Anzeige in einem Arbiter (A) realisiert sind.

## Claims

1. Method for processing a plurality of tasks by a processor in a real-time data processing device, in which device each task has to be processed in one processor, individually in accordance with a dynamically allocated priority and within a predetermined time period, characterized
- in that, for each task to be processed by the processor, an initialization cell (IC) is produced
-- having a number of t bits which contain a time sequence information item which indicates the time within which the processing of the respective task must be carried out, and
-- having a number of i bits, which contain an index information item referring to a task control block in the data processing system,
- in that an initialization cell (IC) which has been produced is entered in a free contention cell (CC) in a contention unit (PCU),
- in that the time sequence information items in the initialization cells (CC) entered in the contention unit (PCU) are compared in order to determine which task has the lowest time sequence information item, and
- in that an interrupt signal (IRINW) is sent to the processor (CPU) in order to initiate the processing of the currently determined task, provided the determined task does not correspond with the previously determined task which is currently being processed by the processor (CPU).

2. Method according to Claim 1, characterized in that the initialization cell (IC) is produced by a process initialization unit (PIU) which contains an initialization cell (IC), with precoded t bits or t bits which have been initialized by the processor (CPU), for each permitted external event that can signal a task for processing by the processor (CPU).

3. Method according to Claim 1, characterized in that, for an internal task to be processed, for example a subtask, the t and i bits for a contention cell (CC) are produced by the processor (CPU) and are entered in the contention unit (PCU).

4. Method according to one of Claims 1 to 3, characterized in that, an r bit is provided in each contention cell (CC) in the contention unit (PCU) to indicate whether this contention cell (CC) is or is not occupied, and in that, before entering an initialization cell (IC) into a contention cell (CC) in the contention unit (PCU), the r bit is checked to confirm whether the contention cell is or is not free.

5. Method according to one of Claims 1 to 4, characterized in that the value of an up-counting counter (C_{UP}) is added to the relative time information item contained in the t bits of an initialization cell (IC), before this cell is entered in a free contention cell (CC) in the contention unit (PCU), in order to generate an absolute time information item, which is entered in the t bits of the contention cell (CC).

6. Method according to one of Claims 1 to 4, characterized in that the relative time information item contained in the t bits of an initialization cell is entered directly in a free contention cell in the contention unit, and in that the contents of the t bits of all contention cells is reduced in accordance with the clock rate of a down-counting counter.

7. Method according to one of Claims 1 to 6, characterized in that each contention cell (CC) in the contention unit (PCU) contains f bits, which are intended for intertask communication, for example semaphore, event flags or message boxes, by means of which it is possible temporarily to suppress the participation of a contention cell (CC) in the comparison of the time sequence information items contained in the t bits.

8. Method according to one of Claims 1 to 7, characterized in that the comparison of the time sequence information items in the contention cells (CC) is carried out only when a write access to the contention unit (PCU) has occurred which has changed the state of at least one contention cell (CC).

9. Method according to Claim 8, characterized in that, irrespective of the state of the contention cells (CC), a comparison of the time sequence information items in all the occupied contention cells (CC) is still carried out periodically, in order to indicate overloading as soon as it is found that a task has not been processed within the time provided in the t bits.

10. Device for processing a plurality of tasks within a predetermined time period in one processor in accordance with a dynamically allocated priority, characterized
- in that, for each task to be processed, the device has means (PIU, CPU) for producing an initialization cell (IC), comprising a number of t bits which contain a time sequence information item that indicates the time within which the processing of the respective task must be carried out, as well as a number of i bits, which contain an index information item referring to a task control block in the data processing system,
- in that the device has means for entering each initialization cell (IC) which has been produced in a free contention cell (CC) in a contention unit (PCU),
- in that the device has means (A) for comparing the entered time sequence information items, in order to determine which task ends first, based on the time by which it must be processed, and
- in that the device has means (A) for sending an interrupt signal (IRINW) to the processor (CPU) in order to initiate the processing of the currently determined task, provided the determined task does not correspond with the previously determined task which is currently being processed by the processor (CPU).

11. Device according to Claim 10, characterized in that the means for producing an initialization cell (IC) is a process initialization unit (PIU) in which an initialization cell (IC), having precoded t bits or t bits which are initialized by the processor (CPU), is provided for an external task that is to be processed.

12. Device according to Claim 10, characterized in that the means for producing an initialization cell is itself the processor (CPU), for example in order to generate a subtask.

13. Device according to one of Claims 10 to 12, characterized in that the device has means (FREE CELL) for checking an r bit in the contention cells (CC), which r bit indicates whether the cell is or is not occupied.

14. Device according to Claim 13, characterized in that the device furthermore has means for setting and resetting f bits in each contention cell (CC) in the contention unit (PCU), which are provided for intertask communication, for example semaphore, event flags or message boxes, by means of which it is possible temporarily to suppress the participation of a contention cell (CC) in the comparison of the time sequence information items contained in the t bits.

15. Device according to one of Claims 10 to 14, characterized in that the device has means for adding the contents of an up-counting counter (C_{UP}) to the relative time sequence information item contained in the t bits of an initialization cell (IC), in order to generate an absolute time information item, which is entered in the t bits of the associated cell (CC) in the contention unit (PCU).

16. Device according to one of Claims 10 to 14, characterized in that the device has means for reducing the relative time sequence information item contained in the t bits of each contention cell, in accordance with the clock rate of a down-counting counter.

17. Device according to Claim 15, characterized in that the device has means (COMP) for comparing the lowest time sequence information item of all the occupied contention cells (CC) with the up-counting counter (C_{UP}) in order to indicate overloading if the value of the lowest time sequence information item is less than the value of the counter (C_{UP}).

18. Device according to Claim 16, characterized in that the device has means for indicating an overload state when the value of the time sequence information item which represents the shortest waiting time has reached the value zero.

19. Device according to one of Claims 17 or 18, characterized in that, furthermore, means (b) are provided for blocking the overload indication.

20. Device according to one of Claims 10 to 19, characterized in that
- the means for comparing the time sequence information item contained in the t bits in the contention cells (CC),
- the means (FREE CELL) for checking an r bit in the contention cells (CC)
- means for checking f bits in each contention cell (CC) in the contention unit (PCU),
- the means (COMP) for comparing the lowest time sequence information item of all the occupied contention cells (CC) with the up-counting counter (C_{UP}),
- the means for indicating an overload state, and
- the means (b) for blocking the overload indication are implemented in an arbiter (A).

## Revendications

1. Procédé pour le traitement de plusieurs tâches par un processeur d'une installation de traitement de données en temps réel, dans laquelle chaque tâche doit être traitée dans le processeur individuellement selon une priorité associée de manière dynamique et dans les limites d'un intervalle de temps prédéterminé,
**caractérisé par le fait que**
- on forme pour chaque tâche à traiter par le processeur une cellule d'initialisation (IC)
-- avec un certain nombre de bits t qui contiennent une information de laps de temps indiquant les limites d'intervalle de temps dans lesquelles le traitement de la tâche doit être effectué
-- et avec un certain nombre de bits i qui contiennent une information d'index pointant sur un "Task Control Block" de l'installation de traitement de données,
- on enregistre une cellule d'initialisation (IC) formée dans une cellule de contention (CC) libre d'une unité de contention (PCU),
- on compare les informations de laps de temps des cellules d'initialisation (CC) enregistrées dans l'unité de contention (PCU) pour déterminer la tâche qui a la plus petite information de laps de temps, et
- on envoie un signal d'interruption (IRINW) au processeur (CPU) pour déclencher le traitement de la tâche actuellement déterminée dans la mesure où la tâche déterminée ne coïncide pas avec la tâche déterminée auparavant qui est justement traitée par le processeur (CPU).

2. Procédé selon la revendication 1, **caractérisé par le fait que** l'on forme la cellule d'initialisation (IC) au moyen d'une unité d'initialisation de processus (PIU) qui contient, pour chaque évènement externe admis qui peut signaler une tâche pour le traitement par le processeur (CPU), une cellule d'initialisation (IC) avec des bits t codés à l'avance ou initialisés par le processeur (CPU).

3. Procédé selon la revendication 1, **caractérisé par le fait que l'**on forme pour une tâche interne à traiter, par exemple une sous-tâche, les bits t et i pour une cellule de contention (CC) au moyen du processeur (CPU) et qu'on les enregistre dans l'unité de contention (PCU).

4. Procédé selon l'une des revendications 1 à 3, **caractérisé par le fait que** l'on prévoit dans chaque cellule de contention (CC) de l'unité de contention (PCU) un bit r qui indique si cette cellule est occupée ou non **et que**, avant l'enregistrement d'une cellule d'initialisation (IC) dans une cellule de contention (CC) de l'unité de contention (PCU), on contrôle le bit r pour déterminer si la cellule de contention est libre ou non.

5. Procédé selon l'une des revendications 1 à 4, **caractérisé par le fait que** l'on additionne la valeur d'un compteur croissant (CUP) à l'information de temps relatif contenue dans les bits t d'une cellule d'initialisation (IC), avant l'enregistrement de cette cellule dans une cellule de contention (CC) libre de l'unité de contention (PCU), afin de produire une information de temps absolu que l'on enregistre dans les bits t de la cellule de contention (CC).

6. Procédé selon l'une des revendications 1 à 4, **caractérisé par le fait que** l'on enregistre l'information de temps relatif contenue dans les bits t d'une cellule d'initialisation directement dans une cellule de contention libre de l'unité de contention **et que** l'on diminue le contenu des bits t de toutes les cellules de contention en fonction de la cadence d'un compteur décroissant.

7. Procédé selon l'une des revendications 1 à 6, **caractérisé par le fait que** chaque cellule de contention (CC) de l'unité de contention (PCU) contient des bits f qui sont prévus pour une communication entre tâches, par exemple par sémaphores, indicateurs d'événements ou boîtes de messages, et avec lesquels la participation d'une cellule de contention (CC) à la comparaison des informations de laps de temps contenues dans les bits t peut être temporairement annulée.

8. Procédé selon l'une des revendications 1 à 7, **caractérisé par le fait que** l'on n'effectue la comparaison des informations de laps de temps des cellules de contention (CC) que s'il s'est produit un accès en écriture à l'unité de contention (PCU) qui a modifié l'état d'au moins une cellule de contention (CC).

9. Procédé selon la revendication 8, **caractérisé par le fait que,** indépendamment de l'état des cellules de contention (CC), on effectue aussi périodiquement une comparaison des informations de laps de temps de toutes les cellules de contention (CC) occupées afin d'indiquer une surcharge dès que l'on constate qu'une tâche n'a pas été traitée dans les limites du laps de temps prescrit dans les bits t.

10. Dispositif pour le traitement de plusieurs tâches dans un processeur selon une priorité associée dynamiquement et dans les limites d'un intervalle de temps prédéterminé,
**caractérisé par le fait que**
- il comporte pour chaque tâche à traiter des moyens (PIU, CPU) pour former une cellule d'initialisation (IC) constituée d'un certain nombre de bits t qui contiennent une information de laps de temps indiquant les limites d'intervalle de temps dans lesquelles le traitement de la tâche doit être effectué, ainsi que d'un certain nombre de bits i qui contiennent une information d'index pointant sur un "Task Control Block" de l'installation de traitement de données,
- il comporte des moyens pour enregistrer chaque cellule d'initialisation (IC) formée dans une cellule de contention (CC) libre d'une unité de contention (PCU),
- il comporte des moyens (A) pour comparer les informations de laps de temps enregistrées afin de déterminer la tâche dont le délai de traitement expire au plus tôt, et que
- il comporte des moyens (A) pour envoyer un signal d'interruption (IRINW) au processeur (CPU) afin de déclencher le traitement de la tâche déterminée dans la mesure où la tâche déterminée ne coïncide pas avec la tâche déterminée auparavant qui est justement traitée par le processeur (CPU).

11. Dispositif selon la revendication 10, **caractérisé par le fait que** le moyen pour former une cellule d'initialisation (IC) est une unité d'initialisation de processus (PIU) dans laquelle il est prévu pour une tâche externe à traiter une cellule d'initialisation (IC) avec des bits t codés à l'avance ou initialisés par le processeur (CPU).

12. Dispositif selon la revendication 10, **caractérisé par le fait que** le moyen pour former une cellule d'initialisation est le processeur (CPU) lui-même, par exemple pour produire une sous-tâche.

13. Dispositif selon l'une des revendications 10 à 12, **caractérisé par le fait qu**'il comporte des moyens (FREE CELL) pour contrôler un bit r des cellules de contention (CC) qui indique si la cellule considérée est occupée ou non.

14. Dispositif selon la revendication 13, **caractérisé par le fait qu**'il comporte aussi des moyens pour affecter et remettre à zéro des bits f de chaque cellule de contention (CC) de l'unité de contention (PCU) qui sont prévus pour une communication entre tâches, par exemple par sémaphores, indicateurs d'événements ou boîtes de messages, et avec lesquels la participation d'une cellule de contention (CC) à la comparaison des informations de laps de temps contenues dans les bits t peut être temporairement annulée.

15. Dispositif selon l'une des revendications 10 à 14, **caractérisé par le fait qu**'il comporte des moyens pour additionner le contenu d'un compteur croissant (C_{UP}) à l'information de temps relatif contenue dans les bits t d'une cellule d'initialisation (IC) afin de produire une information de temps absolu qui est enregistrée dans les bits t de la cellule (CC) associée de l'unité de contention (PCU).

16. Dispositif selon l'une des revendications 10 à 14, **caractérisé par le fait qu**'il comporte des moyens pour diminuer l'information de temps relatif contenu dans les bits t de chaque cellule de contention en fonction de la cadence d'un compteur décroissant.

17. Dispositif selon la revendication 15, **caractérisé par le fait qu**'il comporte des moyens (COMP) pour comparer la plus petite information de laps de temps de toutes les cellules de contention (CC) occupées au compteur croissant (CUP) afin d'indiquer une surcharge si la valeur de la plus petite information de laps de temps est inférieure à la valeur du compteur (C_{UP}).

18. Dispositif selon la revendication 16, **caractérisé par le fait qu**'il comporte des moyens pour indiquer un état de surcharge si la valeur de l'information de laps de temps représentant le plus petit temps d'attente a atteint la valeur nulle.

19. Dispositif selon l'une des revendications 17 ou 18, **caractérisé par le fait qu**'il est aussi prévu des moyens (b) pour bloquer l'indication de surcharge.

20. Dispositif selon l'une des revendications 10 à 19, **caractérisé par le fait que**
- les moyens pour comparer les informations de laps de temps contenues dans les bits t des cellules de contention (CC),
- les moyens (FREE CELL) pour contrôler un bit r des cellules de contention (CC),
- des moyens pour contrôler des bits f de chaque cellule de contention (CC) de l'unité de contention (PCU),
- les moyens (COMP) pour comparer la plus petite information de laps de temps de toutes les cellules de contention (CC) occupées au compteur croissant (C_{UP}),
- les moyens pour indiquer un état de surcharge et que
- les moyens (b) pour bloquer l'indication de surcharge, sont mis en oeuvre dans un dispositif d'arbitrage (A).
